# EUROPÄISCHE PATENTSCHRIFT

(11) **EP 0 505 369 B1**
(45) Veröffentlichungstag und Bekanntmachung des Hinweises auf die Patenterteilung: **08.03.1995**
(21) Anmeldenummer: 90916247.1
(22) Anmeldetag: 14.11.1990
(51) Int. Cl.: H02K 9/19, H02K 19/34

(54) **FLÜSSIGKEITSGEKÜHLTER ELEKTRISCHER GENERATOR**
LIQUID-COOLED ELECTRIC GENERATOR
GENERATRICE ELECTRIQUE REFROIDIE PAR LIQUIDE

(30) Priorität: 15.12.1989 DE 3941474
(43) Veröffentlichungstag der Anmeldung: 30.09.1992
(73) Patentinhaber: ROBERT BOSCH GMBH, 70442 Stuttgart (DE)
(72) Erfinder: FRISTER, Manfred, D-7141 Schwieberdingen (DE)
(86) Internationale Anmeldenummer: DE9000871
(87) Internationale Veröffentlichungsnummer: WO9109445

(56) Entgegenhaltungen:
- DE-A- 1 438 626
- DE-A- 1 900 025
- DE-C- 1 167 591
- FR-A- 1 364 058
- FR-A- 2 510 319
- FR-A- 2 512 600
- US-A- 2 107 481
- US-A- 2 862 119
- US-A- 3 396 324
- US-A- 3 525 001
- US-A- 4 870 307
- PATENT ABSTRACTS OF JAPAN, Bd. 5, Nr. 186 (E-84)(858) 25 November 1981; & JP-A-56 112866

## Beschreibung

### Stand der Technik

Die Erfindung geht aus von einem flüssigkeitsgekühlten elektrischen Generator nach dem Oberbegriff des Anspruchs 1. Eine solche Maschine ist aus der EP-A-0 302 118 bekannt.

Die Flüssigkeitskühlung elektrischer, namentlich hochbelasteter Generatoren insbesondere im Kraftfahrzeugbereich ist in vielfältiger Form bekannt, beispielsweise als sogenannte Mantelkühlung, Sprühölkühlung oder in Form einer direkten Leiterkühlung. Eine Aufzählung möglicher Kühlungsarten für elektrische Maschinen läßt sich entnehmen dem Buch "Elektrische Maschinen", Band 1, Richter, Birkhäuser-Verlag, 1967, Seiten 295 bis 307.

Bekannt ist es auch, die Verlustleistung eines Kraftfahrzeuggenerators zum Heizen zu verwenden (DE-A- 31 28 081), wobei im Bereich des Stators und der Lagerschilde einen Kühlmantel bildende Kühlkanäle für eine Flüssigkeit vorgesehen sind, die mit dem Wärmemittelkreislauf des den Generator antreibenden Kraftfahrzeugs verbunden sind. Dabei kann auch ein zusätzlicher Heizgenerator von derselben Welle des Kraftfahrzeuggenerators angetrieben werden.

Ferner ist es bei einem Drehstromgenerator bekannt (DE-A- 31 35 901), zu den beiden Wälzlagern der Läuferwelle Schmierölkanäle zu führen, wobei die Läuferwelle eine zentrale Längsbohrung enthält, die in der Nähe des antriebsseitigen Wälzlagers in wenigstens eine Radialbohrung übergeht, die in einen zur Aufnahme von Schmieröl geeigneten Ringraum mündet. Dabei sind Mittel vorgesehen, um eine solche Ölschmierung durch Anschluß an den Schmierölkreislauf einer Brennkraftmaschine zu vereinfachen, wobei der Ölabfluß über den antriebsseitigen Lagerdeckel des Drehstromgenerators erfolgt.

Außerdem ist es aus der DE-A- 19 00 025 bekannt, bei einer elektrischen Maschine zum Antrieb einer Winde das zylindrische Maschinengehäuse in einen zylindrischen Kühlblock der Winde einzusetzen und ein von außen zu- und abgeführtes Kühlmittel durch schraubenförmige Nuten im Kühlblock zu leiten, um die Verlustwärme vom zylindrischen Gehäuse der elektrischen Maschine abzuführen. Dabei ist der Kühlblock mitsamt der darin angeordneten elektrischen Maschine an der Winde auswechselbar angeordnet.

Schließlich ist es aus der US-A- 4 870 307 bekannt, einen flüssigkeitsgekühlten elektrischen Generator für eine Brennkraftmaschine an das Kühlsystem der Brennkraftmaschine mit anzuschließen, indem der Generator mit einem Klauenpol-Leitstückläufer auf dem Wellenstumpf der Antriebswelle befestigt ist und der Ständer mitsamt seinen Generatorwicklungen in einem Kunststoff eingebettet zwischen zwei Flanschen eingespannt ist. Dabei ist der Ständer mit radialem Abstand von einem topfförmigen zusätzlichen Gehäuse umgeben, welches gemeinsam mit dem einen Gehäuseflansch am Gehäuse der Brennkraftmaschine angeschraubt ist, so daß das Kühlmittel der Brennkraftmaschine von diesem Gehäuseflansch durch Kanäle zwischen Ständer und äußerem Gehäusetopf zum hinteren Gehäuseflansch und von dort über weitere Kanäle wieder zum vorderen Gehäuseflansch zurückfließt.

Bei diesen Lösungen ist jeweils ein besonderer Gehäusetopf zur Begrenzung des Kühlflüssigkeitsmantels am Außenumfang der elektrischen Maschine erforderlich.

Der Erfindung liegt die Aufgabe zugrunde, einen nach dem Grundprinzip der Mantelkühlung flüssigkeitsgekühlten Generator so auszubilden, daß sich bei einfachem und kostengünstigem Aufbau eine besonders wirkungsvolle Kühlung ergibt.

### Vorteile der Erfindung

Der erfindungsgemäße elektrische Generator löst diese Aufgabe mit den kennzeichnenden Merkmalen des Hauptanspruchs und hat den Vorteil, daß trotz der durch die Erfindung realisierten, sehr wirkungsvollen Mantelkühlung auf die doppelwandige Ausbildung des Generatorgehäuses verzichtet werden kann, so daß sich erhebliche Gewichts- und Kostenersparnisse ergeben, die Kühlung aber dennoch besonders wirkungsvoll ist, da der Generator entsprechend der Erfindung einen Teil eines Motorblocks oder einer vergleichbaren Komponente bei einer Brennkraftmaschine als zweite und vom Generator aus gesehen sozusagen äußere Wandung verwendet, wobei die Kühlflüssigkeit dann unmittelbar als Wasser- oder Ölkühlung von dem Kühlmittelkreislauf des zugeordneten Aggregats abgeleitet ist.

Hierdurch ergibt sich ferner der Vorteil, daß keine gesonderten Kühlmittelanschlüsse vorhanden sein müssen, die Gefahr laufen undicht zu werden, denn der gesamte Generator ist mit seinem einwandigen, flüssigkeitsdichten Gehäuse von einer Ausnehmung oder einer Nische eines Motoren- oder Getriebeteils, kurz eines beliebigen Aggregats der Brennkraftmaschine aufgenommen, die intern entweder mit dem Kühlmittelflüssigkeitsumlauf oder auch mit dem Schmierölumlauf der Brennkraftmaschine in Verbindung steht.

Von entscheidender Bedeutung ist ferner, daß sich hierdurch praktisch auch keine Dichtungsprobleme ergeben, denn der äußere Generatorgehäusemantel kann auf der Seite des B-Lagerschilds topfförmig ausgebildet sein, wobei die einzelnen Generatorelemente in der Topfform enthalten sind, während das A-Lagerschild auf der Antriebsseite dann einen Deckel bildet, dessen radial überstehender Flanschbereich gleichzeitig der Abdeckung und der Befestigung des Generators in der Aufnahmehöhlung des Brennkraftmaschinenteils dient. Es genügt daher, in diesem Bereich entsprechende Dichtungen, also beispielsweise Flächendichtungen oder O-Ringdichtungen anzuordnen, je nach den Erfordernissen und Gegebenheiten, die die Brennkraftmaschine selbst in ihrem Aufbau und in ihrer entsprechenden Kontur bietet.

Die Erfindung ermöglicht daher sowohl eine gute Ankopplung des Kühlmittelkreislaufs für den Generator an das Motorkühlsystem als auch an den Ölkreislauf der Brennkraftmaschine, wobei im letzteren Fall auch in einfacher Weise eine Ankopplung der Lagerschmierung des Generators an den Motorölkreislauf möglich ist.

Ferner ergibt sich eine gute bis hervorragende Geräuschdämmung des elektrischen Generators, da auf eigene, üblicherweise geräuschvoll arbeitende Lüfterräder verzichtet werden kann und im übrigen der Generator in der Brennkraftmaschinen-Aufnahmehöhlung auch geräuschgedämmt untergebracht ist.

Neben der erheblichen Gewichts- und Kostenersparnis bei der durch die Erfindung ermöglichten Mantelkühlung eines Generators ist schließlich noch erwähnenswert ein hierdurch bewirkter besonders guter Wärmefluß von den entsprechende Arbeitswärme unmittelbar entwickelnden Bereichen, also den Wickelköpfen, Lagern bzw. Erregerwicklung durch geeignete Wärmekontaktierungsmittel in Form wärmeleitender Materialien zum Generatorgehäuse, welches unmittelbar vom Kühlmittel umflossen ist.

Durch die in den Unteransprüchen aufgeführten Maßnahmen sind vorteilhafte Weiterbildungen und Verbesserungen des im Hauptanspruch angegebenen flüssigkeitsgekühlten elektrischen Generators möglich; so kann dieser mit Vorteil auf einer Läuferwelle zwei oder auch mehr Systeme enthalten; hierdurch wird nicht nur das Trägheitsmoment des Läufers geringer, so daß bei einer leistungsgleichen Ausführung mit nur einem System kleiner gebaut werden kann, sondern es ergibt sich auch die Möglichkeit hoher Antriebsdrehzahlen, also eine entsprechend hohe Nutzung des oder der vorgesehenen Systeme.

Dabei ist bei einer Mehrfachsystemanordnung neben der Parallelschaltung der Systeme auch eine Reihenschaltung möglich, so daß beispielsweise ein Dreileiterbordnetz versorgt werden kann.

Dabei können mit besonderem Vorteil Leitstückläufersysteme mit stationärer Erregerwicklung verwendet werden, so daß Bürsten und Schleifringe völlig entfallen und schon aus diesem Gesichtspunkt eine hohe Lebensdauer sichergestellt ist, die durch die weiter vorn schon erwähnte Möglichkeit des gleichzeitigen Anschlusses der Lagerschmierung an das Schmiersystem der Brennkraftmaschine noch verbessert wird.

Ferner ist es möglich, Gleichrichter und Regler sowohl im einwandigen Gehäuse des Generators einzubauen oder an getrennter Stelle wegzubauen, wobei das Gleichrichtersystem ebenfalls wassergekühlt in einer weiteren Nische oder einem entsprechenden, kühlmitteldurchflossenen Hohlraum der Brennkraftmaschine angeordnet werden kann.

Schaltet man im übrigen bei Mehrfachsystemanordnungen die Gleichstromseiten parallel, dann gelingt es ferner, Ausgleichströme durch Unsymmetrien zu vermeiden und die Welligkeit der Ausgangsspannung wie bei Mehrphasensystemen deutlich zu reduzieren.

### Zeichnung

Ausführungsbeispiele der Erfindung sind in der Zeichnung dargestellt und werden in der nachfolgenden Beschreibung näher erläutert. Es zeigen:
- Fig. 1: in detaillierter Querschnittdarstellung die Aufnahme eines erfindungsgemäßen, im vorliegenden Fall als Besonderheit noch zwei Systeme umfassenden, flüssigkeitsgekühlten Generators in einer Nische bzw. einem Aufnahmehohlraum eines zugeordneten Brennkraftmaschinen- oder Kraftfahrzeugaggregats;
- Fig. 2: lediglich als Ausschnitt die Möglichkeit, die Lagerschmierung durch Ankopplung an einen Motorölkreislauf in Kombination mit Flüssigkeitskühlung vorzunehmen;
- Fig. 3: eine Ausführungsform für einen weggebauten wassergekühlten Gleichrichter, der ebenfalls in einem Aufnahmehohlraum eines Brennkraftmaschinenaggregats angeordnet ist und die
- Fig. 4 und 5: in Form eines Blockschaltbildes und in detaillierter Darstellung mögliche elektrische Verschaltungen bei Mehrfachsystemanordnungen.

### Beschreibung der Ausführungsbeispiele

Der Grundgedanke vorliegender Erfindung besteht darin, einen auch mehrere Systeme enthaltenden flüssigkeitsgekühlten Generator speziell für die Bordnetzversorgung von Fahrzeugen dadurch einer besonders wirksamen Mantelkühlung zu unterwerfen, daß der Flüssigkeitsmantel einerseits vom Generatorgehäuse, welches ergänzend zum besseren Wärmeübergang auch über Kühlrippen verfügen kann, begrenzt ist, andererseits aber durch einen Teil eines Aggregats des Kraftfahrzeugs oder der sonstigen beweglichen Einheit, der der Generator zugeordnet ist, speziell also durch einen Aufnahmehohlraum im Motorblock oder im Getriebeblock des Antriebsaggregats.

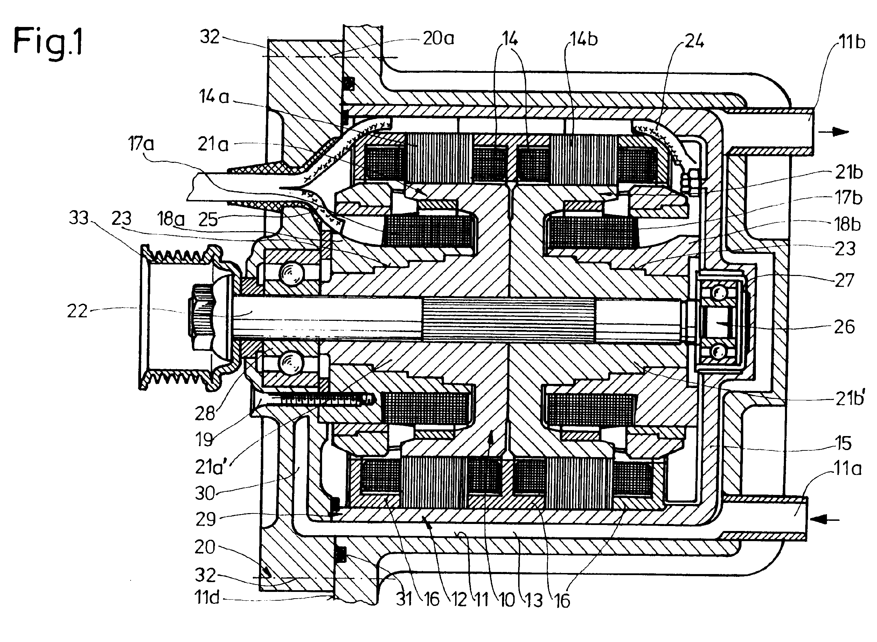

In Fig. 1 ist ein Ausführungsbeispiel eines flüssigkeitsgekühlten Generators in Form eines Doppelgenerators mit zwei Systemen vollständig dargestellt und mit 10 bezeichnet; er ist aufgenommen in einem hier speziell der äußeren Gehäuseform des Generators folgenden Aggregatteil, vorzugsweise des Motors, aber auch anderer Teile der Brennkraftmaschine die in geeigneter Weise so ausgestattet sind. Dieser den Generator mit seinem Gehäuse aufnehmende Teil wird im folgenden als Aufnahmehohlraum 11 bezeichnet. Der Aufnahmehohlraum 11 steht über einen Kühlmittelzulauf 11a und einen Kühlmittelablauf 11b mit einem geeigneten Kreislauf vorzugsweise der Brennkraftmaschine in Verbindung; es kann sich hier um den Kühlmittelkreislauf handeln oder gegebenenfalls auch um den Schmiermittelkreislauf, in welchem Falle dann der Generator ölgekühlt ist.

Die Generatorkomponenten sind in einem Generatorgehäuse 12 aufgenommen, welches nach außen die Begrenzung für den Wasser- oder Ölkühlmantel 13 bildet, der das Generatorgehäuse im Aufnahmehohlraum 11 des Motorblocks umspült. Über den Aufnahmehohlraum, dessen spezielle Ausbildung bzw. Anordnung im Bereich des Antriebsaggregats eines Kraftfahrzeugs o.dgl. ist nichts weiter festzustellen, da dieser Teil je nach den Gegebenheiten zu bestimmen und auszubilden ist; mit Vorzug ist jedoch die vordere Begrenzungsfläche 11d des Aufnahmehohlraums plan ausgebildet, jedenfalls im Bereich einer vorgegebenen Überdeckung durch einen vorspringenden Flansch am Generatorgehäuse, so daß die Befestigung des gesamten Generators durch Einschieben in den Aufnahmehohlraum am entsprechenden Teil des Motorblocks oder Getriebes und planer Außenanlage problemlos vorgenommen werden kann.

Der flüssigkeitsgekühlte Generator ist bei dem in Fig. 1 gezeigten Ausführungsbeispiel als Doppelgenerator ausgebildet und umfaßt zwei Systeme mit einem doppelten Leitstückläufer.

Die beiden Ständer 14a, 14b mit ihren jeweiligen Winkelköpfen 14 sind in dem topfförmigen, den Hauptteil des Generatorgehäuses bildenden B-Lagerschild 15 aufgenommen, wobei im Übergang zur Innenfläche des B-Lagerschilds 15 noch spezielle Wärmeleitstücke 16 vorgesehen sein können, um einen optimalen Wärmeübergang zu gewährleisten. Die beiden Erregerwicklungen 17a und 17b sind bei dem hier schleifringlos ausgebildeten Doppelgeneratorsystem stationär gehalten und von entsprechend geteilten Innenpolteilen 18a, 18b gelagert, die selbst stationär von Generatorgehäuseteilen getragen sind; bei 19 ist eine Schraube dargestellt, die den einen Innenteilpol 18a mit dem A-Lagerschild 20 verbindet. Der zweiteilige Leitstückläufer 21a, 21b sitzt auf der Läuferwelle 22, wobei die Doppelnabe 21a′, 21b′ des Doppelleitstückläufers über die gesamte innere Länge auf der Läuferwelle 22 sitzt und mit dem Innenpol 18a, 18b der Erregerwicklungen einen ersten, hier treppenförmig verlaufenden inneren Luftspalt 23 bildet. Hierdurch verbessert sich die magnetische Wirksamkeit des Gesamtsystems erheblich, da der Luftspalt sich über die gesamte Tiefe des Innenpols erstreckt.

In Fig. 1 ist bei 24 noch die B-seitige Erregerwicklungszuleitung dargestellt, die sich mit der A-seitigen Erregerwicklungszuleitung 25 vereinigt und mit ihr zusammen durch eine gemeinsame Bohrung im A-Lagerschild 20 nach außen geführt ist.

Das topfförmige B-Lagerschild 15 weist am abgewandten Ende eine das B-seitige Lager 26 der Läuferwelle 22 aufnehmende Ausbuchtung 27 auf, während das A-seitige Lager 28 in einer geeigneten Aufnahmebohrung des A-Lagerschilds 20 sitzt, welches gleichzeitig der Flanschbefestigung des gesamten Doppelgenerators dient.

Zu diesem Zweck ist das deckelartig ausgebildete A-Lagerschild 20 auf den äußeren Topfringrand des B-Lagerschilds 15 aufgesetzt und dort mit diesem verbunden, unter Zwischenlage von geeigneten Dichtungen 29, worauf nicht genauer eingegangen zu werden braucht.

Um auch im Bereich des A-seitigen Läuferwellenlagers 28 eine hinreichende Kühlung sicherzustellen, kann ferner ein mit dem Flüssigkeitsmantel zwischen dem Generatorgehäuse und dem Aufnahmehohlraum fluchtender Kühlkanal 30 von an sich beliebiger, auch ringförmiger Form im A-Lagerschild 20 eingearbeitet sein. Ferner verfügt die Außenfläche des topfförmigen Generatorgehäuses, also das B-Lagerschild 15 vorzugsweise über Rippen geeigneter Form und Richtung, so daß sich hierdurch nicht nur ein besserer Wärmeübergang ergibt, sondern auch eine geeignete Führung der Kühlflüssigkeit vom Zulauf 11a zum Ablauf 11b sichergestellt ist.

Der die lichte Öffnung des Aufnahmehohlraums mit seinem Ringflansch 20a überragende äußere Gehäusedeckel (A-Lagerschild 20) dient dann der Befestigung des flüssigkeitsgekühlten Generators am entsprechenden Maschinenaggregat, wiederum unter Zwischenlegung von Dichtungen 31 und mit Hilfe entsprechender Verschraubungsmittel, die bei 32 lediglich angedeutet sind. Der Antrieb der Läuferwelle 22 erfolgt dann mittels einer geeigneten Keilriemenscheibe 33, die an dem das antriebsseitige Lagerschild 20 durchsetzenden Läuferwellenstummel in geeigneter Weise befestigt ist, kann gegebenenfalls aber auch von innen aus erfolgen, indem die Läuferwelle das dann A-seitige Lagerschild 15 abgedichtet durchsetzt und mit einem Ritzel mit einem rotierenden Maschinenelement von Motor und Getriebe kämmt.

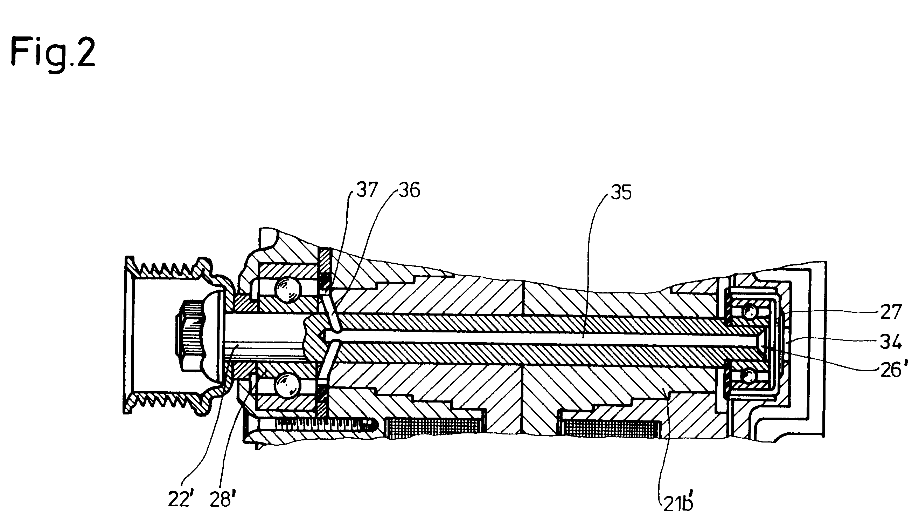

Es versteht sich, daß als den Kühlmantel bildendes Kühlmittel sowohl Wasser als auch Öl verwendet werden kann, je nach den Gegebenheiten des entsprechenden Maschinenaggregats, wobei im Fall einer Ölkühlung die gleichzeitige Versorgung der ölgeschmierten Lager des Generators in vereinfachter Weise erfolgen kann, indem entsprechend der Darstellung der Fig. 2 von dem ohnehin zwischen dem Generatorgehäuse und dem Aufnahmehohlraum befindlichen Ölkühlmantel durch eine entsprechende Öleintrittsöffnung 34 das Schmieröl noch zugeführt werden kann.

In Fig. 2 ist lediglich im eng begrenzten Ausschnitt die Möglichkeit der Ölversorgung der Generatorlager gezeigt, wobei die Zufuhr des Schmieröls zu den beiden die Läuferwelle lagernden Wälzlagern im Grundsatz so erfolgen kann, wie in der weiter vorn schon erwähnten DE-OS 31 35 901 beschrieben. Der Öleintritt erfolgt also bei 34 im Bereich des B-seitigen Wälzlagers 26′, wobei die Läuferwelle 22′ eine Längsbohrung 35 enthält, die dann in der Nähe des antriebsseitigen Wälzlagers 28′ in Radialbohrungen 36 übergehen kann, die über einen sich an diese anschließenden Ringraum 37 auch das A-seitige Wälzlager 28′ mit Schmieröl versorgen. Der Öiaustritt erfolgt dann über eine radial an das antriebsseitige Wälzlager 28′ angesetzte Radialbohrung.

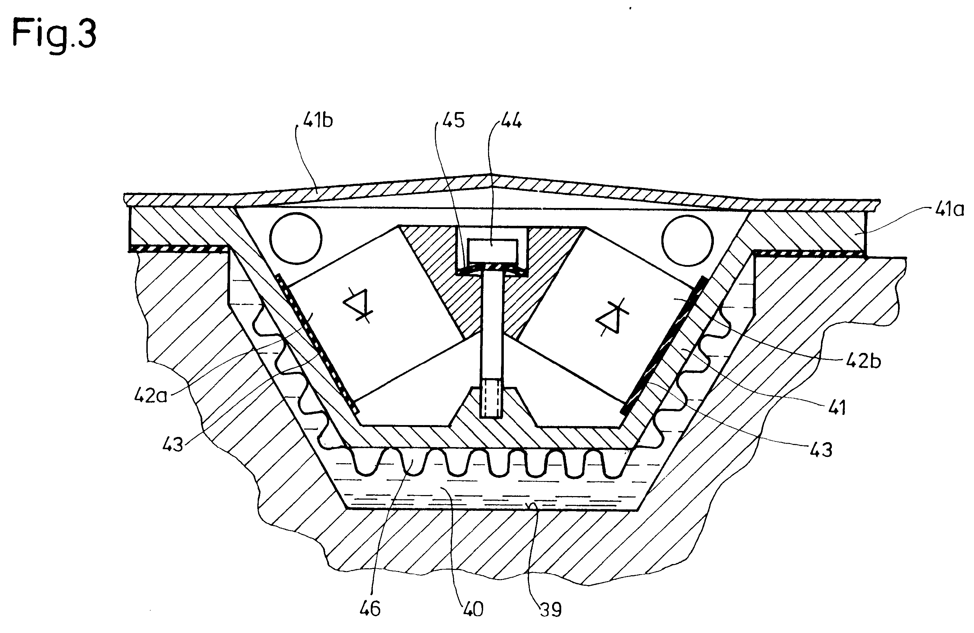

Ein weiterer Vorteil bei vorliegender Erfindung besteht darin, daß es zwar möglich ist, auch den hochbelasteten Gleichrichterbereich innerhalb des durch einen Kühlmantel wirksam gekühlten Generatorgehäuse zu belassen; es ist aber auch möglich, die Gleichrichtereinheit wegzubauen und einer separaten Wasserkühlung zuzuführen, wie dies in der Darstellung der Fig. 3 gezeigt ist. Das Grundprinzip ähnelt der Ausführungsform der Fig. 1 für den Generator; es ist auch hier ein Aufnahmehohlraum 39 von einem geeigneten Maschinenaggregat, beispielsweise Brennkraftmaschine, gebildet mit entsprechenden Anschlüssen zum Kühlmittelkreislauf, so daß ein Wassermantel 40 entsteht, in welchen das Lagerteil für die Gleichrichterblöcke, welches im folgenden als Kühlwanne 41 bezeichnet wird, eintaucht und entsprechend befestigt ist. Die Kühlwanne 41 lagert in geeigneter Weise die beiden Gleichrichterblöcke 42a, 42b, die an den Innenwänden der Kühlwanne 41 über eine zwischengefügte Isolationsschicht 43 anliegen können. Ausbildung und Form der Gleichrichterblöcke kann beliebig sein; bei dem dargestellten Ausführungsbeispiel der Fig. 3 ist ein gemeinsames, durch entsprechende Isolierungen die einzelnen Dioden voneinander elektrisch trennendes Lagerteil vorgesehen, welches mit Hilfe einer geeigneten zentralen Befestigung, beispielsweise einer Befestigungsschraube 44 mit zwischengelegter Druckfeder 45 die beiden die Grundform eines Dreiecks aufweisenden Gleichrichterblöcke 42a, 42b gegen die inneren schrägen Wandungen der Kühlwanne 41 drückt.

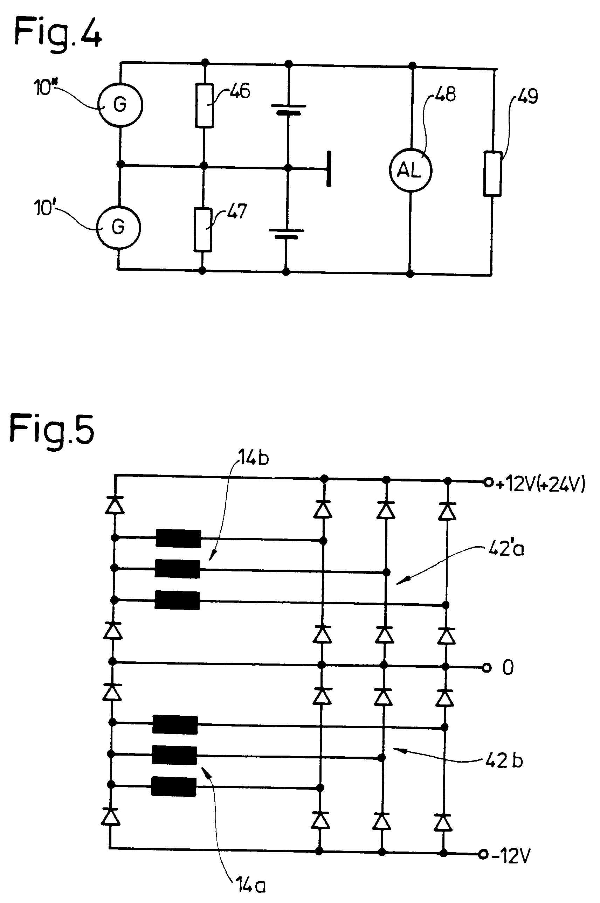

Die Kühlwanne 41 kann sich bis in einen äußeren Flanschbereich 41a fortsetzen, mit welchem sie zusammen mit einem entsprechenden Deckel 41b an der an den Aufnahmehohlraum 39 angrenzenden Außenfläche des jeweiligen Maschinenaggregats befestigt ist. Mit Vorteil weist die Kühlwanne 41 an ihrer äußeren Fläche noch Kühlrippen 46 beliebiger Form und Anordnung auf, so daß sich ein günstiger Wärmeübergang erzielen läßt. Da die Anordnung von zwei oder gegebenenfalls sogar mehr Drehstromsystemen innerhalb eines solchen flüssigkeitsgekühlten Generators vorteilhaft ist, besteht die Möglichkeit, durch entsprechende Reihenschaltung der einzelnen vorgesehenen Generatorsysteme 10′, 10˝ entsprechend Fig. 4 Mehrleiternetze zu bilden, wobei beispielsweise der Mittelanschluß an Masse gelegt sein kann. Es ist dann möglich, Einzelverbraucher für die jeweiligen von den beiden Generatorsystemen 10′, 10˝ gelieferten Spannungen vorzusehen, die in Fig. 4 mit 46 und 47 bezeichnet sind. Es ist aber auch möglich, gemeinsame Verbraucher 48, 49 über die gesamte Reihenschaltung der beiden Generatorsysteme 10′, 10˝ zu legen, so daß bei diesen mit höheren Spannungen gearbeitet werden kann, beispielsweise zur Erzielung einer besseren Abtauwirkung bei Kraftfahrzeugfenstern u.dgl. Es ist auch möglich, die beiden Generatorsysteme für unterschiedliche Spannungen auszulegen, so daß beispielsweise das Generatorsystem 10′ eine Bordnetzspannung von üblichen 12 V und das Generatorsystem 10˝ eine Bordnetzspannung von beispielsweise 24 V liefert, so daß sich insgesamt ein 12 V/24 V/36 V Dreileiternetz realisieren läßt.

Stark schematisiert ist eine solche Dreileiternetzversorgung in Fig. 5 gezeigt mit den einzelnen Ständerwicklungen 14a, 14b für die unterschiedlichen Netzspannungen, die auf eigene Gleichrichterblöcke 42a′, 42b′ arbeiten, die hintereinandergeschaltet sind und an ihrem Verbindungspunkt den Masseanschluß bilden.

Ein weiterer Vorteil vorliegender Erfindung ist bei Verzicht auf die Reihenschaltung der vorgesehenen mindestens zwei Drehstromsysteme dann möglich, wenn man die beiden Drehstromsysteme elektrisch um 30° zueinander verdreht, entweder durch entsprechende Manipulation im Ständerbereich oder am Läufer, so daß man bei der Parallelschaltung (beide Systeme müssen dann die gleiche Bordnetzspannung liefern) einen Übergang von einem üblichen 6-pulsigen Gleichrichtersystem (dreiphasige Vollweggleichrichtung) auf ein 12-pulsiges Gleichrichtersystem erzielen kann und sich auch eine entschieden besser geglättete Gleichspannung mit dem Vorteil geringerer Störungen ergibt, was insbesondere auch für spannungsempfindliche Verbraucher von erheblicher Bedeutung sein kann.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Flüssigkeitsgekühlter elektrischer Generator (10), insbesondere Drehstromgenerator für Kraftfahrzeuge, Motorräder, Busse, Bahnen bzw. sonstige bewegliche Fahrzeuge, mit Läufer (21a, 21b), Stator (14a, 14b) und einem beide Teile aufnehmenden und ein A- und ein B-Lager (26, 28) für die Läuferwelle (22) bildenden Gehäuse (15, 20), ferner mit Mitteln zur Flüssigkeitskühlung (Öl- oder Wasserkühlung) aus dem Kühlmittelkreislauf eines Motor- bzw. Getriebeblockes einer Brennkraftmaschine, wobei ein Flüssigkeitsmantel (13) einerseits begrenzt und gebildet ist durch zumindest den Außenumfang des Generatorgehäuses (15, 20) und der das B-Lager (26) tragende Boden eines B-Lagerschildes (15) vom Flüssigkeitsmantel (13) mit umgeben ist, dadurch gekennzeichnet, daß das B-Lagerschild (15) topfförmig ist und zusammen mit einem deckelformigen A-Lagerschild (20) das Gehäuse (15, 20) bildet, daß der Flüssigkeitsmantel (13) andererseits durch einen Teil mit einem topfförmigen Aufnahmeholraum (11) des Motor- bzw. Getriebeblocks gebildet ist, in welchen das topfförmige B-Lagerschild (15) des Generators (10) vollständig mit einem entsprechenden radialen und axialen Abstand für die Kühlmittelflüssigkeit eingesetzt ist.

2. Flüssigkeitsgekühlter elektrischer Generator nach Anspruch 1, dadurch gekennzeichnet, daß der die Außenumhüllung für den Flüssigkeitsmantel (13) bildende Teil des Motor- bzw. Getriebeblocks den Aufnahmehohlraum (11) mit einer solchen Innenkontur umfaßt, daß das topfförmige B-Lagerschild (15) des Generators (10) unter der entsprechenden Abstandsbildung für den Flüssigkeitsmantel (13) in diesen Hohlraum (11) einsetzbar ist und daß der Aufnahmehohlraum (11) einen Zulauf (11a) und einen Ablauf (11b) für das Flüssigkeitsmittel (Wasser, Öl) aufweist.

3. Flüssigkeitsgekühlter elektrischer Generator nach Anspruch 1 oder 2, dadurch gekennzeichnet, daß das deckelförmige A-Lagerschild (20) mit einem randseitig nach außen erweiterten Flansch (32) gleichzeitig der Befestigung und Abdichtung des Generators (10) an einer äußeren Begrenzungsfläche (11d) des Aufnahmehohlraums (11) dient.

4. Flüssigkeitsgekühlter elektrischer Generator nach einem der Anspruche 1 bis 3, dadurch gekennzeichnet, daß das deckelförmige A-Lagerschild (20) unter Zwischenlage von Dichtungen (29) an die Topfringstirnfläche des B-Lagerschilds (15) angesetzt ist und daß das A-Lagerschild (20) mindestens einen zum Flüssigkeitsmantel (13) offenen Kanal (30) aufweist, der zur Kühlung des A-seitigen Läuferwellenlagers (28) bis in dessen Bereich geführt ist.

5. Flüssigkeitsgekühlter elektrischer Generator nach einem der Ansprüche 1 bis 4, dadurch gekennzeichnet, daß der über den Aufnahmehohlraum (11) überstehende, der Befestigung des Generators am Maschinenteil dienende Randflansch (32) unter Zwischenlage mindestens einer Dichtung (31) an dessen planer Außenfläche angesetzt und befestigt ist.

6. Flüssigkeitsgekühlter elektrischer Generator nach einem der Ansprüche 1 bis 5, dadurch gekennzeichnet, daß mindestens die Außenfläche des topfförmigen, vom Kühlflüssigkeitsmantel umspülten B-Lagerschilds Materialrippen zur Führung der Kühlflüssigkeit und zum besseren Wärmeübergang aufweist.

7. Flüssigkeitsgekühlter elektrischer Generator nach einem der Ansprüche bis 6, dadurch gekennzeichnet, daß das mindestens ein Ständerpaket (14a) unmittelbar an die Innenwandung des topfförmigen Lagerschildes (15) angesetzt ist und dessen Wickelköpfe (14) über zwischengefügte Wärmeleitstücke (16) an der Generatorgehäuse-Innenwandung anliegen zur Erzielung eines verbesserten Wärneübergangs.

8. Flüssigkeitsgekühlter elektrischer Generator nach einem der Ansprüche 1 bis 7, dadurch gekennzeichnet, daß mindestens zwei Systeme innerhalb des Generatorgehäuses (12) angeordnet und von der gleichen Läuferwelle (22) angetrieben sind (Doppelgenerator).

9. Flüssigkeitsgekühlter elektrischer Generator nach Anspruch 8, dadurch gekennzeichnet, daß beide vorgesehenen Systeme Leitstückläufer-Teilgeneratoren sind, mit feststehendem, die Erregerwicklungen (17a, 17b) tragenden Innenpolen (18a, 18b) und treppenförmigem inneren Luftspaltübergang (23) von den inneren Nabenbereichen der Polräder zu den feststehenden Innenpolen mit den Erregerwicklungen.

10. Flüssigkeitsgekühlter elektrischer Generator nach einem der Ansprüche 1 bis 9, dadurch gekennzeichnet, daß eine vom Generator (10) weggebaute Gleichrichtereinheit mit eigenem Lagerteil (Kühlwanne 41) in einem gesonderten Aufnahmehohlraum (39) des Teils des Motor- oder Getriebeblocks angeordnet ist.

11. Flüssigkeitsgekühlter elektrischer Generator nach Anspruch 10, dadurch gekennzeichnet, daß der wassergekühlte Gleichrichter zwei Gleichrichterblöcke (42a, 42b) aufweist, die mittels einer Befestigung gegen die Innenwände der Kühlwanne (41) gepreßt sind, daß die Kühlwanne (41) Kühlrippen (46) aufweist, die in den Kühlflüssigkeitsmantel zwischen ihr und dem gesonderten Aufnahmehohlraum (39) eintauchen und daß die Kühlwanne einen überstehenden äußeren Randflansch aufweist, mit welchem sie selbst an der Außenfläche des gesonderten Aufnahmehohlraums (39) unter Zwischenlegung von Dichtungen befestigt ist und einen Abschlußdeckel (41b) lagert.

12. Flüssigkeitsgekühlter elektrischer Generator nach einem oder mehreren der Ansprüche 1 bis 11, dadurch gekennzeichnet, daß in Verbindung mit dem das Generatorgehäuse (12) umspülenden Flüssigkeitsmantel (13) die Schmierung der beiden Läuferwellenlager (26, 28) an den Schmierölkreislauf der Brennkraftmaschine angekoppelt ist.

13. Flüssigkeitsgekühlter elektrischer Generator nach Anspruch 12, dadurch gekennzeichnet, daß der Schmierölzulauf (34) zum B-seitigen Lager (26′) und von diesem durch eine Axialbohrung in der Läuferwelle (22′) zum A-seitigen Lager (28′) geführt ist, wo der Schmierölkreislauf über Querkanäle (36) in einen Ringraum (37) einmündet, aus welchem das Schmieröl zu einer Ölaustrittsbohrung (38) gelangt.

14. Flüssigkeitsgekühlter elektrischer Generator nach Anspruch 13, dadurch gekennzeichnet, daß die beiden Läuferwellenlager (26′, 28′) bei Anschluß an den Motorölkreislauf mittels Ringdichtungen gegenüber dem Generatorinneren abgedichtet sind.

15. Flüssigkeitsgekühlter elektrischer Generator nach einem oder mehreren der Ansprüche 1 bis 14, dadurch gekennzeichnet, daß die mindestens zwei im Generatorgehäuse (12) unter Reduzierung des auf die Läuferwelle einwirkenden Trägheitsmoments angeordneten Generatorteilsysteme zur Bildung eines Dreileiterbordnetzes in Reihe geschaltet sind.

16. Flüssigkeitsgekühlter elektrischer Generator nach einem oder mehreren der Ansprüche 1 bis 14, dadurch gekennzeichnet, daß die mindestens zwei im Generatorgehäuse (12) unter Reduzierung des auf die Läuferwelle einwirkenden Trägheitsmoments angeordneten Generatorteilsysteme zur Bildung eines Dreileiterbordnetzes auf der Gleichstromseite zueinander parallelgeschaltet sind.

17. Flüssigkeitsgekühlter elektrischer Generator nach Anspruch 16, dadurch gekennzeichnet, daß bei Parallelschaltung der Generatorteilsysteme auf der Gleichstromseite die beiden Drehstromsysteme im Ständeroder Läuferbereich um 30° elektrisch gegeneinander verdreht sind derart, daß bei dreiphasiger Vollweggleichrichtung ein 12-pulsiges Ausgangsgleichstromsignal hoher Glättung gebildet ist.

18. Flüssigkeitsgekühlter elektrischer Generator nach einem der Ansprüche 1 bis 17, dadurch gekennzeichnet, daß die Läuferwelle das äußere A-Lagerschild (20) durchsetzt und für den äußeren Antrieb eine Keilriemenscheibe lagert.

19. Flüssigkeitsgekühlter elektrischer Generator nach einem der Ansprüche 1 bis 17, dadurch gekennzeichnet, daß die Läuferwelle das innere Lagerschild (15) abgedichtet durchsetzt und mit einem Ritzel mit einem drehangetriebenen Teil des angrenzenden Maschinenaggregats kämmt.

## Claims

1. Liquid-cooled electric generator (10), in particular three-phase generator for motor vehicles, motor-cycles, buses, trains or other moving vehicles, having a rotor (21a, 21b), a stator (14a, 14b) and a housing (15, 20) which accommodates both parts and forms an A and a B bearing (26, 28) for the rotor shaft (22), and having, furthermore, means for liquid cooling (oil or water cooling) from the coolant circuit of an engine block or gear block of an internal combustion engine, a liquid jacket (13) being bounded and formed on the one hand by at least the outer circumference of the generator housing (15, 20) and the base, supporting the B bearing (26), of a B bearing bracket (15) also being surrounded by the liquid jacket (13), characterized in that the B bearing bracket (15) is pot-shaped and forms the housing (15, 20) in conjunction with a lid-shaped A bearing bracket (20) and in that on the other hand the liquid jacket (13) is formed by a part having a pot-shaped accommodating cavity (11) of the engine block or gear block, into which the pot-shaped B bearing bracket (15) of the generator (10) is completely inserted with an appropriate radial and axial spacing for the liquid coolant.

2. Liquid-cooled electric generator according to Claim 1, characterized in that the part of the engine block or gear block which forms the external casing for the liquid jacket (13) comprises the accommodating cavity (11) having an internal contour such that the pot-shaped B bearing bracket (15) of the generator (10) can be inserted into said cavity (11) with the formation of a that the accommodating cavity (11) has an inlet (11a) and an outlet (11b) for the liquid coolant (water, oil).

3. Liquid-cooled electric generator according to Claim 1 or 2, characterized in that the lid-shaped A bearing bracket (20) having a flange (32) that is widened outwards at the rim side serves simultaneously to mount and seal the generator (10) on an external bounding surface (11d) of the accommodating cavity (11).

4. Liquid-cooled electric generator according to one of Claims 1 to 3, characterized in that the lid-shaped A bearing bracket (20) is attached with the interposition of seals (29) to the annular end face of the pot of the B bearing bracket (15), and in that the A bearing bracket (20) has at least one duct (30) which is open towards the liquid jacket (13) and is guided right into the region of the A-side rotor shaft bearing (28) in order to cool it.

5. Liquid-cooled electric generator according to one of Claims 1 to 4, characterized in that the rim flange (32), which projects over the accommodating cavity (11) and serves to mount the generator on the machine part, is attached to and mounted on the flat outer surface thereof with the interposition of at least one seal (31).

6. Liquid-cooled electric generator according to one of Claims 1 to 5, characterized in that at least the external surface of the pot-shaped B bearing bracket, which is washed around by the cooling liquid jacket, has material ribs for guiding the cooling liquid and for better heat transfer.

7. Liquid-cooled electric generator according to one of Claims 1 to 6, characterized in that the at least one laminated stator core (14a) is applied directly to the inner wall of the pot-shaped bearing bracket (15) and its winding overhangs (14) bear against the generator housing inner wall via interposed thermally conducting pieces (16) in order to achieve an improved heat transfer.

8. Liquid-cooled electric generator according to one of Claims 1 to 7, characterized in that at least two systems are arranged inside the generator housing (12) and are driven by the same rotor shaft (22) (double generator).

9. Liquid-cooled electric generator according to Claim 8, characterized in that the two systems provided are conducting-piece rotor subgenerators having fixed internal poles (18a, 18b) supporting the field windings (17a, 17b) and a staircase-shaped internal air gap transition (23) from the internal spider regions of the rotors to the fixed internal poles with the field windings.

10. Liquid-cooled electric generator according to one of Claims 1 to 9, characterized in that a rectifier unit built remotely from the generator (10) is arranged in a bearing part (cooling trough 41) in a separate accommodating cavity (39) of the part of the engine block or gear block.

11. Liquid-cooled electric generator according to Claim 10, characterized in that the water-cooled rectifier has two rectifier blocks (42a, 42b) which are pressed by means of a fastening against the internal walls of the cooling trough (41), in that the cooling trough (41) has cooling ribs (46) which dip into the cooling liquid jacket between it and the separate accommodating cavity (39), and in that the cooling trough has a projecting external rim flange with which it is itself fastened to the external surface of the separate accommodating cavity (39) with the interposition of seals and supports a closing cover (41b).

12. Liquid-cooled electric generator according to one or more of Claims 1 to 11, characterized in that in connection with the liquid jacket (13) washing around the generator housing (12) the lubrication of the two rotor shaft bearings (26, 28) is coupled to the lubricating oil circuit of the internal combustion engine.

13. Liquid-cooled electric generator according to Claim 12, characterized in that the lubricating oil inlet (34) is guided to the B-side bearing (26′) and from the latter through an axial bore in the rotor shaft (22′) to the A-side bearing (28′), where the lubricating oil circuit opens via transverse ducts (36) into an annular space (37) from which the lubricating oil passes to an oil discharge bore (38).

14. Liquid-cooled electric generator according to Claim 13, characterized in that upon connection to the engine oil circuit the two rotor shaft bearings (26′, 28′) are sealed with respect to the generator interior by means of ring seals.

15. Liquid-cooled electric generator according to one or more of Claims 1 to 14, characterized in that the at least two generator subsystems arranged in the generator housing (12) with reduction of the moment of inertia acting on the rotor shaft are connected in series in order to form a three-wire network.

16. Liquid-cooled electric generator according to one or more of Claims 1 to 14, characterized in that the at least two generator subsystems arranged in the generator housing (12) with reduction of the moment of inertia acting on the rotor shaft are connected to one another in parallel in order to form a three-wire network on the DC side.

17. Liquid-cooled electric generator according to Claim 16, characterized in that given parallel connection of the generator subsystems on the DC side the two three-phase systems in the stator or rotor region are rotated electrically with respect to one another by 30° in such a way that a highly smoothed 12-pulse output DC signal is formed given three-phase full-wave rectification.

18. Liquid-cooled electric generator according to one of Claims 1 to 17, characterized in that the rotor shaft penetrates the external A bearing bracket (20) and supports a V-belt pulley for the external drive.

19. Liquid-cooled electric generator according to one of Claims 1 to 17, characterized in that the rotor shaft penetrates the internal bearing bracket (15) in a sealed fashion and meshes by means of a pinion with a rotary-driven part of the adjacent machine unit.

## Revendications

1. Génératrice électrique refroidie par un liquide (10), en particulier alternateur triphasé pour véhicules à moteur, motocyclettes, autobus, trains ou autres véhicules mobiles, avec un induit (21a, 21b), un stator (14a, 14b) et un carter (15, 20) recevant les deux pièces et constituant un palier A et un palier B (26, 28) pour l'arbre d'induit (22), en outre avec des moyens pour le refroidissement par un liquide (refroidissement à l'huile ou à l'eau) à partir du circuit d'agent de refroidissement d'un bloc moteur ou d'un bloc de transmission d'un moteur à combustion interne, une enveloppe de liquide (13) étant limitée d'un côté et constituée par au moins le pourtour extérieur du carter de génératrice (15, 20), et le fond portant le palier B (26) d'un flasque de palier B (15) étant entouré par une enveloppe de liquide (13), génératrice électrique caractérisée en ce que le flasque de palier B (15) a la forme d'un pot et forme le carter (15, 20) en même temps qu'un flasque de palier A (20) en forme de couvercle, en ce que l'enveloppe de liquide (13) est formée par ailleurs par une partie du bloc moteur ou du bloc de transmission, avec un espace creux de réception en forme de pot (11) dans lequel le flasque de palier B (15) en forme de pot de la génératrice (10) est complètement inséré en laissant une distance axiale et radiale adéquate pour le liquide de refroidissement.

2. Génératrice électrique refroidie par un liquide selon la revendication 1, caractérisée en ce que la partie qui constitue l'enveloppe extérieure du manteau liquide (13) du bloc moteur ou du bloc de transmission, entoure l'espace creux de réception (11) avec un contour intérieur tel que le flasque de palier B (15) en forme de pot de la génératrice (10) peut être inséré dans cet espace creux (11) en constituant la distance correspondante pour l'enveloppe de liquide (13), et en ce que l'espace creux de réception (11) présente une entrée (11a) et une sortie (11b) pour le liquide de refroidissement (eau, huile).

3. Génératrice électrique refroidie par un liquide selon la revendication 1 ou 2, caractérisée en ce que le flasque de palier A (20) en forme de couvercle, avec une bride (32) qui va en s'élargissant vers l'extérieur du côté du bord, sert à la fixation et à l'étanchéité de la génératrice (10) sur une surface de délimitation extérieure (11d) de l'espace creux de réception (11).

4. Génératrice électrique refroidie par un liquide selon l'une des revendications 1 à 3, caractérisée en ce que le flasque de palier A (20) en forme de couvercle est raccordé, avec interposition des joints d'étanchéité (29), à la face frontale en forme de bague de pot du flasque de palier B (15), et en ce que le flasque de palier A (20) présente au moins un canal ouvert (30) en direction de l'enveloppe de liquide (13), canal qui, pour refroidir le palier à roulement (28) de l'induit du côté A, va jusque dans sa zone.

5. Génératrice électrique refroidie par un liquide selon l'une des revendications 1 à 4, caractérisée en ce que la bride de bordure qui surplombe l'espace creux de réception (11) et qui sert à la fixation de la génératrice sur la partie du moteur, est raccordée et fixée sur la face extérieure plane de la bride avec interposition d'au moins un joint d'étanchéité (31).

6. Génératrice électrique refroidie par un liquide selon l'une des revendications 1 à 5, caractérisée en ce qu'au moins la face extérieure du flasque de palier B en forme de pot, entourée par l'enveloppe de liquide de refroidissement, présente des nervures qui servent à guider le liquide de refroidissement et à mieux faire passer la chaleur.

7. Génératrice électrique refroidie par un liquide selon l'une des revendications 1 à 6, caractérisée en ce qu'au moins l'un des paquets de tôles du stator (14a) est directement placé sur la paroi intérieure du flasque de palier (15) en forme de pot, et en ce que ses têtes de bobine (14) reposent sur la paroi interne du carter de la génératrice au moyen de pièces conductrices de la chaleur (16) interposées pour obtenir un passage amélioré de la chaleur.

8. Génératrice électrique refroidie par un liquide selon l'une des revendications 1 à 7, caractérisée en ce qu'au moins deux systèmes sont disposés à l'intérieur du carter de génératrice (12) et sont entraînés par le même arbre d'induit (22) (double génératrice).

9. Génératrice électrique refroidie par un liquide selon la revendication 8, caractérisée en ce que les deux systèmes prévus sont des génératrices partielles avec induit à pièces conductrices de la chaleur, avec des pôles intérieurs (18a, 18b) fixes qui portent les enroulements d'excitation (17a, 17b), et un entrefer interne (23) en forme d'escalier allant des zones intérieures de moyeu des roues polaires, aux pôles intérieurs fixes avec les enroulements d'excitation.

10. Génératrice électrique refroidie par un liquide selon l'une des revendications 1 à 9, caractérisée en ce qu'une unité de refroidissement montée à l'écart de la génératrice (10) est disposée avec sa propre pièce de support (cuve de refroidissement 41) dans un espace creux de réception particulier (39) de la partie de bloc-moteur ou de bloc de transmission.

11. Génératrice électrique refroidie par un liquide selon la revendication 10, caractérisée en ce que le redresseur refroidi à l'eau présente deux blocs de redressement (42a, 42b) qui sont comprimés au moyen d'une fixation contre les parois internes de la cuve de refroidissement (41), en ce que la cuve de refroidissement (41) présente des nervures de refroidissement (46) qui plongent dans l'enveloppe de liquide de refroidissement entre celle-ci et l'espace creux particulier de réception (39), et en ce que la cuve de refroidissement présente une bride de bordure extérieure surplombante par laquelle elle est fixée elle-même sur la face extérieure de l'espace creux de réception particulier (39), avec interposition de joints d'étanchéité, et porte un couvercle de fermeture (41b).

12. Génératrice électrique refroidie par un liquide selon l'une ou plusieurs des revendications 1 à 11, caractérisée en ce qu'en liaison avec l'enveloppe de liquide (13) entourant le carter de la génératrice (12), le graissage des deux paliers à roulement (26, 28) de l'induit est couplé sur le circuit d'huile de lubrification du moteur à combustion interne.

13. Génératrice électrique refroidie par un liquide selon la revendication 12, caractérisée en ce que l'arrivée d'huile de lubrification (34) est amenée au palier situé du côté B (26′) et va à partir de celui-ci, à travers un alésage axial de l'arbre d'induit (22′), au palier situé du côté A (28′) où le circuit d'huile de lubrification débouche, via des canaux transversaux (36), dans un espace annulaire (37) à partir duquel l'huile de lubrification arrive à un alésage de sortie d'huile (38).

14. Génératrice électrique refroidie par un liquide selon la revendication 13, caractérisée en ce que les deux paliers de l'arbre d'induit (26′, 28′) sont rendus étanches, lors du raccordement au circuit d'huile du moteur, au moyen de joints d'étanchéité annulaires, par rapport à l'intérieur de la génératrice.

15. Génératrice électrique refroidie par un liquide selon l'une ou plusieurs des revendications 1 à 14, caractérisée en ce qu'au moins les deux systèmes partiels de génératrice en réduisant le moment d'inertie agissant sur l'arbre d'induit, sont montés en série pour constituer un réseau de bord triphasé.

16. Génératrice électrique refroidie par un liquide selon l'une ou plusieurs des revendications 1 à 14, caractérisée en ce qu'au moins les deux systèmes partiels de génératrice disposés dans le carter de génératrice (12), en réduisant le moment d'inertie agissant sur l'arbre d'induit, sont montés en parallèle du côté à courant continu pour former un réseau de bord triphasé.

17. Génératrice électrique refroidie par un liquide selon la revendication 16, caractérisée en ce qu'en cas de branchement en parallèle des systèmes partiels de génératrice du côté à courant continu, les deux systèmes triphasés sont décalés électriquement l'un par rapport à l'autre de 30° dans la zone du stator ou de l'induit, de telle façon que soit formé un signal de courant continu de sortie à douze impulsions à lissage élevé dans le cas d'un redressement pleine onde triphasé.

18. Génératrice électrique refroidie par un liquide selon l'une des revendications 1 à 17, caractérisée en ce que l'arbre d'induit passe à travers le flasque de palier A (20) et porte un disque de courroie trapézoïdale pour l'entraînement extérieur.

19. Génératrice électrique refroidie par un liquide selon l'une des revendications 1 à 17, caractérisée en ce que l'arbre d'induit passe à travers le flasque de palier intérieur (15) de façon étanche et engrène, par un pignon, avec une pièce entraînée en rotation du bloc moteur adjacent.
